# EUROPÄISCHE PATENTANMELDUNG

(11) **EP 4 757 494 A1**
(43) Veröffentlichungstag der Anmeldung: **10.06.2026**
(21) Anmeldenummer: 25217189.7
(22) Anmeldetag: 20.11.2025
(51) Int. Cl.: H05B 47/155, G06F 40/30, G06N 3/08, G06N 20/00, G10L 15/00, H05B 47/175

(54) **VERFAHREN ZUR ÄNDERUNG MINDESTENS EINES BELEUCHTUNGSZUSTANDS DURCH SPRACHBEFEHL, COMPUTERSYSTEM, DAZU EINGERICHTET, DAS VERFAHREN AUSZUFÜHREN, UND COMPUTERPROGRAMMPRODUKT UMFASSEND SOFTWARECODEABSCHNITTE**

(30) Priorität: 04.12.2024 DE 102024136184
(71) Anmelder: MA Lighting Technology GmbH, 97297 Waldbüttelbrunn (DE)
(72) Erfinder: Schneider, Alexander, 97297 Waldbüttelbrunn (DE); Kohl, Michael, 97297 Waldbüttelbrunn (DE); Wursthorn, Tobias, 28307 Bremen (DE)
(74) Vertreter: advotec.

(57) **Zusammenfassung**

Die Erfindung betrifft ein Verfahren zur Änderung mindestens eines Beleuchtungszustands durch Sprachbefehl (2), umfassend die Schritte des Erhaltens und Eingebens des Sprachbefehls (2) in ein Sprachmodell (3), des Interpretierens und Zerlegens des Sprachbefehls (2) in mindestens eine Unteraufgabe (4), des Erlangens mindestens eines Beleuchtungsmerkmals (6) mindestens eines Beleuchtungsobjekts (7) und mindestens einer Einstellungsmöglichkeit (8) des Beleuchtungsmerkmals (6), des Bestimmens mindestens eines Beleuchtungsobjekts (7) und mindestens eines Beleuchtungsmerkmals (6) des bestimmten Beleuchtungsobjekts (7) mittels Inferenz mit einem trainierten maschinell lernenden Modell (5) unter Eingabe des Beleuchtungsmerkmals (6), der Einstellungsmöglichkeit (8) und der Unteraufgabe (4), des Erstellens eines Ablaufplans (10) mittels Inferenz mit dem trainierten maschinell lernenden Modell (5) unter Eingabe des bestimmten Beleuchtungsobjekts (7), des bestimmten Beleuchtungsmerkmals (6) und/oder der Einstellungsmöglichkeit (8) und des Veränderns des Beleuchtungszustands gemäß dem Ablaufplan (10). Des Weiteren betrifft die Erfindung ein Computersystem (20), dazu eingerichtet, das Verfahren auszuführen, sowie ein Computerprogramm-Produkt, umfassend Softwarecodeabschnitte, die derart ausgebildet sind, dass das Verfahren durch zumindest einen Prozessor ausführbar ist.

## Beschreibung

Die Erfindung betrifft ein Verfahren zur Änderung mindestens eines Beleuchtungszustands durch Sprachbefehl, ein Computersystem, das dazu eingerichtet ist, das Verfahren auszuführen, und ein Computerprogramm-produkt umfassend Softwarecodeabschnitte, mittels derer das Verfahren zur Änderung mindestens eines Beleuchtungszustands durch Sprachbefehl ausgeführt wird.

Im Stand der Technik ist es bekannt, Darbietungen, wie Konzerte oder Theaterstücke, aber auch rein auditive Darbietungen, wie Musikstücke in Nachtclubs, durch Lichtshows zu untermalen und/oder die Sichtbarkeit der Darstellung zu erhöhen. Mit der voranschreitenden Lichttechnik wird dem Bedienpersonal eine immer größere Anzahl an Möglichkeiten bereitgestellt. Daher ist es inzwischen nötig, dass Beleuchtungssysteme mittels komplexer Steuerungstechnik sowohl hinsichtlich des abgegebenen Lichts als auch hinsichtlich der Bewegung automatisch angesteuert werden. Dabei haben sich verschiedene Steuerungsprotokolle zur Ansteuerung der einzelnen Beleuchtungsmittel durchgesetzt, die durch teilweise voneinander abweichende Befehle programmiert werden müssen. Die Lichtshows werden in der Regel in Teilen oder vollständig vorprogrammiert und während der Aufführung abgespielt, wobei eine Anpassung in begrenztem Rahmen erfolgen kann.

Die Verbreitung der zuvor genannten Programmierung der Lichtshow hat zur Folge, dass diese aufgrund der Komplexität nur durch geschultes Personal durchgeführt werden kann. Dieses muss einerseits die entsprechende Programmiersprache, welche teilweise vom Hersteller der Steuerungstechnik eigens entwickelt wurde und daher in der Branche nicht einheitlich ist, beherrschen und andererseits die Anordnung und Ausstattung des vorliegenden Beleuchtungsequipments sowie die Örtlichkeit genau kennen, um eine ansprechende und abgestimmte Lichtshow erstellen zu können.

Im Stand der Technik sind wenige Assistenzsysteme bekannt, die dem Benutzer aufgrund von ihm vorgenommener Voreinstellungen, einer Lichtshowbibliothek oder früherer Lichtshows Vorschläge machen. Aus der US 11,687,760 B2 ist zudem ein Verfahren bekannt, das mit Hilfe einer Vielzahl an zuvor erstellten Lichtshows dem Benutzer nach Eingabe erster Befehle mindestens einen weiteren Befehl vorschlägt, der statistisch gesehen häufig auf die bis jetzt eingegebenen Befehle folgt.

Dennoch bleibt die Erstellung, Veränderung und Anpassung von Lichtshows ein komplexer Vorgang, der nur nach einer hinreichenden Schulung durchgeführt werden kann. Die Anwendung wird durch die fortschreitenden technischen Möglichkeiten tendenziell eher noch komplexer.

Es besteht daher ein großer Bedarf an einem Verfahren, das die Änderung eines Beleuchtungszustands von Beleuchtungsobjekten für eine Lichtshow auf einfache und intuitive Weise ermöglicht und welches für alle denkbaren Anwendungsfälle nutzbar ist. Daher liegt ein weiteres Augenmerk darauf, dass das Verfahren mit allen im Stand der Technik bekannten Vorrichtungen verwendbar und kostengünstig durchführbar ist. Auf diese Weise kann die Erstellung und/oder Anpassung von Lichtshows weitgehend unterstützt und/oder automatisiert werden. Die Erfindung hat sich daher die Aufgabe gestellt, ein Verfahren, ein Computersystem und ein Computerprogrammprodukt bereitzustellen, um die oben genannten Schwierigkeiten zu überwinden.

Diese Aufgabe wird auf überraschend einfache, aber wirkungsvolle Weise durch ein Verfahren gemäß der Lehre des unabhängigen Anspruchs 1, ein Computersystem gemäß der Lehre des Hauptanspruchs 14 und ein Computerprogrammprodukt gemäß der Lehre des Hauptanspruchs 15 gelöst.

Erfindungsgemäß ist ein Verfahren zur Änderung mindestens eines Beleuchtungszustands durch Sprachbefehl vorgeschlagen, wobei das Verfahren folgende Schritte umfasst:
a. im ersten Schritt ein Erhalten eines Sprachbefehls und Eingeben eines Sprachbefehls in ein Sprachmodell;
b. im zweiten Schritt ein Interpretieren und Zerlegen des Sprachbefehls in mindestens eine Unteraufgabe;
c. im dritten Schritt ein Erlangen mindestens eines Beleuchtungsmerkmals mindestens eines Beleuchtungsobjekts und mindestens einer Einstellungsmöglichkeit des mindestens einen Beleuchtungszustands und Bestimmen mindestens eines Beleuchtungsobjekts und mindestens eines Beleuchtungsmerkmals des mindestens einen bestimmten Beleuchtungsobjekts mittels Inferenz mit dem trainierten maschinell lernenden Modell unter Eingabe des mindestens einen Beleuchtungsmerkmals, der mindestens einen Einstellungsmöglichkeit und der mindestens einen Unteraufgabe;
d. im vierten Schritt ein Erstellen eines Ablaufplans mittels Inferenz mit dem trainierten maschinell lernenden Modell unter Eingabe des mindestens einen bestimmten Beleuchtungsobjekts, des mindestens einen bestimmten Beleuchtungsmerkmals und/oder der mindestens einen Einstellungsmöglichkeit; und
e. im fünften Schritt ein Verändern des mindestens einen Beleuchtungszustands gemäß dem Ablaufplan.

Die Erfindung beruht auf dem Grundgedanken, dass die immer weiter voranschreitende Entwicklung von Sprachmodellen dazu führt, dass diese mit dem Ziel eingesetzt werden können, einen in natürlicher Sprache abgefassten Befehl eines Benutzers zu interpretieren und letztendlich in eine Änderung eines Beleuchtungsobjekts oder mehrerer Beleuchtungsobjekte für eine Lichtshow und/oder zur Erstellung einer Lichtshow zu überführen. Hierfür ist es nötig, den Sprachbefehl zunächst in Unteraufgaben zu zerteilen und zur Ausführung der Unteraufgaben durch ein speziell darauf trainiertes maschinell lernendes Modell in entsprechende Steuerungscodes und/oder anderweitig mögliche Ansteuermöglichkeiten und/oder Visualisierungen für den Benutzer umzusetzen.

Im ersten Schritt a. wird ein Sprachbefehl erhalten und in ein Sprachmodell eingegeben. Dies ermöglicht die Ausführung des anschließenden Schritts b. Das Erhalten erfolgt bevorzugt über eine entsprechende Schnittstelle durch Eingabe von einem das Verfahren anwendenden Benutzer in Echtzeit. Geeignete Schnittstellen werden an anderer Stelle genannt. Bevorzugt ist das verwendete Sprachmodell gezielt auf die Anwendung des erfindungsgemäßen Verfahrens trainiert. Noch mehr bevorzugt ist das Sprachmodel ein großes Sprachmodell (Large Language Model - LLM), insbesondere ein generativer vortrainierter Transformer (Generative pre-trained Transformer - GPT).

In nächsten, hier zweiten, Schritt b. wird der Sprachbefehl durch das Sprachmodell interpretiert und in mindestens eine Unteraufgabe zerlegt. Mit anderen Worten, das Sprachmodell zerlegt den Sprachbefehl in einzelne Aspekte, die zur Erreichung der gewünschten Änderung abgearbeitet werden müssen. Bevorzugt wird der Sprachbefehl in mindestens 2, 3, 4, 5, 6, 7, 8, 9, 10, 11, 12, 13, 14, 15, 16, 17, 18, 19, 20, 25, 30, 35, 40, 45, 50, 55, 60, 65, 70, 75, 80, 85, 90 oder 100 Unteraufgaben zerlegt. Die Unteraufgaben können dabei insbesondere die Änderung verschiedener Beleuchtungsmerkmale des Beleuchtungszustands eines Beleuchtungsobjekts, einzelner Beleuchtungsmerkmale des Beleuchtungszustands verschiedener Beleuchtungsobjekte, verschiedener Beleuchtungsmerkmale verschiedener Beleuchtungsobjekte und/oder andere Aspekte außerhalb des Beleuchtungsobjekts betreffen, insbesondere Aspekte, die das mindestens eine Beleuchtungsobjekt direkt oder indirekt betreffen. Die mindestens eine Unteraufgabe wird besonders bevorzugt in eine vorgegebene Syntax überführt. Dies ist durch die begrenzte Anzahl an Änderungsmöglichkeiten einfach möglich und führt zu besseren und/oder präziseren Ergebnissen.

In nächsten, hier dritten, Schritt c. werden mindestens ein Beleuchtungsmerkmal mindestens eines Beleuchtungsobjekts sowie mindestens eine Einstellungsmöglichkeit des mindestens einen Beleuchtungsobjekts erlangt, wobei das mindestens eine Beleuchtungsmerkmal, die mindestens eine Einstellungsmöglichkeit und die mindestens eine Unteraufgabe in ein trainiertes maschinell lernendes Modell eingegeben werden, wobei das trainierte maschinell lernende Modell mittels Inferenz mindestens ein Beleuchtungsobjekt und mindestens ein Beleuchtungsmerkmal des zuvor bestimmten Beleuchtungsobjekts bestimmt. Durch das Bestimmen wird das mindestens eine Beleuchtungsobjekt zum mindestens einen bestimmten Beleuchtungsobjekt und das mindestens eine bestimmte Beleuchtungsmerkmal zum mindestens einen bestimmten Beleuchtungsmerkmal. Um die im Sprachbefehl gewünschte Änderung herbeizuführen, ist in den meisten Fällen die Änderung von einzelnen Beleuchtungsmerkmalen und/oder einzelnen Beleuchtungsobjekten notwendig und/oder gewünscht. Das Erlangen des Beleuchtungsmerkmals kann dabei die Art des Beleuchtungsmerkmals, den Wert des Beleuchtungsmerkmals und/oder den Wertebereich des Beleuchtungsmerkmals betreffen. Mit anderen Worten, es ist denkbar, dass das Erlangen des Beleuchtungsmerkmals das Einholen von Wissen über das Vorhandensein eines bestimmten Beleuchtungsmerkmals bei dem mindestens einen Beleuchtungsobjekt, die konkrete Einstellung des Beleuchtungsmerkmals und/oder die technisch möglichen Einstellungen betrifft. Dabei ist es bevorzugt, wenn die technisch möglichen Einstellungen derart berücksichtigt werden, dass bei der Bestimmung eine Bestimmung des mindestens einen Beleuchtungsobjekts und/oder des mindestens einen Beleuchtungsmerkmals, das/die die gewünschte Änderung aufgrund seiner Einstellungsmöglichkeiten nicht umsetzen kann/können, verhindert wird. Das Erlangen des mindestens einen Beleuchtungsmerkmals und/oder der mindestens einen Einstellungsmöglichkeit erfolgt bevorzugt durch Abruf in einer Datenbank und/oder hinterlegter Daten, durch Abfrage der Einstellungen des mindestens eines Beleuchtungsmerkmals, durch Auswertung früherer Steuerungsbefehle und/oder durch Abfragen mindestens eines Zustandssensors. Das Bestimmen wird durch ein vor dem Ausführen des Verfahrens durchgeführtes Trainieren des trainierten maschinell lernenden Modells mittels Trainingsdatensätzen ermöglicht. Bevorzugt handelt es sich bei dem Trainieren um überwachtes Lernen, unüberwachtes Lernen oder bestärkendes Lernen. Das Bestimmen bewirkt insbesondere die Auswahl und/oder das Festsetzen eines anzunehmenden Werts dieser Beleuchtungsmerkmale und/oder Beleuchtungsobjekte. Bevorzugt werden mindestens 2, 3, 4, 5, 6, 7, 8, 9, 10, 11, 12, 13, 14, 15, 16, 17, 18, 19, 20, 25, 30, 35, 40, 45, 50, 55, 60, 65, 70, 75, 80, 85, 90, 100, 150, 200, 250, 300, 350, 400, 450, 500, 550, 600, 650, 700, 750, 800, 850, 900, 950, 1.000, 1.500, 2.000, 2.500, 3.000, 3.500, 4.000, 4.500, 5.000, 5.500, 6.000, 6.500, 7.000, 7.500, 8.000, 8.500, 9.000, 9.500, 10.000, 15.000, 20.000, 25.000, 30.000, 35.000, 40.000, 45.000, 50.000, 55.000, 60.000, 65.000, 70.000, 75.000, 80.000, 85.000, 90.000, 95.000, 100.000, 150.000, 200.000, 250.000, 300.000, 350.000, 400.000, 450.000, 500.000, 550.000, 600.000, 650.000, 700.000, 750.000, 800.000, 850.000, 900.000, 950.000, 1.000.000, 1.500.000, 2.000.000, 2.500.000, 3.000.000, 3.500.000, 4.000.000, 4.500.000, 5.000.000, 5.500.000, 6.000.000, 6.500.000, 7.000.000, 7.500.000, 8.000.000, 8.500.000, 9.000.000, 9.500.000, 10.000.000, 15.000.000, 20.000.000, 25.000.000, 30.000.000, 35.000.000, 40.000.000, 45.000.000, 50.000.000, 55.000.000, 60.000.000, 65.000.000, 70.000.000, 75.000.000, 80.000.000, 85.000.000, 90.000.000, 95.000.000, 100.000.000, 150.000.000, 200.000.000, 250.000.000, 300.000.000, 350.000.000, 400.000.000, 450.000.000, 500.000.000, 550.000.000, 600.000.000, 650.000.000, 700.000.000, 750.000.000, 800.000.000, 850.000.000, 900.000.000, 950.000.000 oder 1.000.000.000 verschiedene oder gleiche Beleuchtungsmerkmale erlangt. Noch mehr bevorzugt wird der Beleuchtungszustand mindestens eines Beleuchtungsobjekts erlangt. Weiter bevorzugt wird mindestens ein Beleuchtungsmerkmal von mindestens 2, 3, 4, 5, 6, 7, 8, 9, 10, 11, 12, 13, 14, 15, 16, 17, 18, 19, 20, 25, 30, 35, 40, 45, 50, 55, 60, 65, 70, 75, 80, 85, 90, 100, 150, 200, 250, 300, 350, 400, 450, 500, 550, 600, 650, 700, 750, 800, 850, 900, 950, 1.000, 1.500, 2.000, 2.500, 3.000, 3.500, 4.000, 4.500, 5.000, 5.500, 6.000, 6.500, 7.000, 7.500, 8.000, 8.500, 9.000, 9.500, 10.000, 15.000, 20.000, 25.000, 30.000, 35.000, 40.000, 45.000, 50.000, 55.000, 60.000, 65.000, 70.000, 75.000, 80.000, 85.000, 90.000, 95.000, 100.000, 150.000, 200.000, 250.000, 300.000, 350.000, 400.000, 450.000, 500.000, 550.000, 600.000, 650.000, 700.000, 750.000, 800.000, 850.000, 900.000, 950.000, 1.000.000, 1.500.000, 2.000.000, 2.500.000, 3.000.000, 3.500.000, 4.000.000, 4.500.000, 5.000.000, 5.500.000, 6.000.000, 6.500.000, 7.000.000, 7.500.000, 8.000.000, 8.500.000, 9.000.000, 9.500.000, 10.000.000, 15.000.000, 20.000.000, 25.000.000, 30.000.000, 35.000.000, 40.000.000, 45.000.000, 50.000.000, 55.000.000, 60.000.000, 65.000.000, 70.000.000, 75.000.000, 80.000.000, 85.000.000, 90.000.000, 95.000.000, 100.000.000, 150.000.000, 200.000.000, 250.000.000, 300.000.000, 350.000.000, 400.000.000, 450.000.000, 500.000.000, 550.000.000, 600.000.000, 650.000.000, 700.000.000, 750.000.000, 800.000.000, 850.000.000, 900.000.000, 950.000.000 oder 1.000.000.000 verschiedenen oder gleichen Beleuchtungsobjekten erlangt, wobei es sich um gleiche und/oder unterschiedliche Beleuchtungsmerkmale handeln kann. Am meisten bevorzugt wird der Beleuchtungszustand aller Beleuchtungsobjekte erlangt. Hierdurch ist eine besonders präzise und umfassende Anpassung möglich, jedoch ist die erlangte Datenmenge je nach Setup sehr groß. Bevorzugt werden mindestens 2, 3, 4, 5, 6, 7, 8, 9, 10, 11, 12, 13, 14, 15, 16, 17, 18, 19, 20, 25, 30, 35, 40, 45, 50, 55, 60, 65, 70, 75, 80, 85, 90, 100, 150, 200, 250, 300, 350, 400, 450, 500, 550, 600, 650, 700, 750, 800, 850, 900, 950, 1.000, 1.500, 2.000, 2.500, 3.000, 3.500, 4.000, 4.500, 5.000, 5.500, 6.000, 6.500, 7.000, 7.500, 8.000, 8.500, 9.000, 9.500, 10.000, 15.000, 20.000, 25.000, 30.000, 35.000, 40.000, 45.000, 50.000, 55.000, 60.000, 65.000, 70.000, 75.000, 80.000, 85.000, 90.000, 95.000, 100.000, 150.000, 200.000, 250.000, 300.000, 350.000, 400.000, 450.000, 500.000, 550.000, 600.000, 650.000, 700.000, 750.000, 800.000, 850.000, 900.000, 950.000, 1.000.000, 1.500.000, 2.000.000, 2.500.000, 3.000.000, 3.500.000, 4.000.000, 4.500.000, 5.000.000, 5.500.000, 6.000.000, 6.500.000, 7.000.000, 7.500.000, 8.000.000, 8.500.000, 9.000.000, 9.500.000, 10.000.000, 15.000.000, 20.000.000, 25.000.000, 30.000.000, 35.000.000, 40.000.000, 45.000.000, 50.000.000, 55.000.000, 60.000.000, 65.000.000, 70.000.000, 75.000.000, 80.000.000, 85.000.000, 90.000.000, 95.000.000, 100.000.000, 150.000.000, 200.000.000, 250.000.000, 300.000.000, 350.000.000, 400.000.000, 450.000.000, 500.000.000, 550.000.000, 600.000.000, 650.000.000, 700.000.000, 750.000.000, 800.000.000, 850.000.000, 900.000.000, 950.000.000 oder 1.000.000.000 Einstellungsmöglichkeiten erlangt. Weiter bevorzugt wird mindestens eine Einstellungsmöglichkeit von mindestens 2, 3, 4, 5, 6, 7, 8, 9, 10, 11, 12, 13, 14, 15, 16, 17, 18, 19, 20, 25, 30, 35, 40, 45, 50, 55, 60, 65, 70, 75, 80, 85, 90, 100, 150, 200, 250, 300, 350, 400, 450, 500, 550, 600, 650, 700, 750, 800, 850, 900, 950, 1.000, 1.500, 2.000, 2.500, 3.000, 3.500, 4.000, 4.500, 5.000, 5.500, 6.000, 6.500, 7.000, 7.500, 8.000, 8.500, 9.000, 9.500, 10.000, , 15.000, 20.000, 25.000, 30.000, 35.000, 40.000, 45.000, 50.000, 55.000, 60.000, 65.000, 70.000, 75.000, 80.000, 85.000, 90.000, 95.000, 100.000, 150.000, 200.000, 250.000, 300.000, 350.000, 400.000, 450.000, 500.000, 550.000, 600.000, 650.000, 700.000, 750.000, 800.000, 850.000, 900.000, 950.000, 1.000.000, 1.500.000, 2.000.000, 2.500.000, 3.000.000, 3.500.000, 4.000.000, 4.500.000, 5.000.000, 5.500.000, 6.000.000, 6.500.000, 7.000.000, 7.500.000, 8.000.000, 8.500.000, 9.000.000, 9.500.000, 10.000.000, 15.000.000, 20.000.000, 25.000.000, 30.000.000, 35.000.000, 40.000.000, 45.000.000, 50.000.000, 55.000.000, 60.000.000, 65.000.000, 70.000.000, 75.000.000, 80.000.000, 85.000.000, 90.000.000, 95.000.000, 100.000.000, 150.000.000, 200.000.000, 250.000.000, 300.000.000, 350.000.000, 400.000.000, 450.000.000, 500.000.000, 550.000.000, 600.000.000, 650.000.000, 700.000.000, 750.000.000, 800.000.000, 850.000.000, 900.000.000, 950.000.000 oder 1.000.000.000 verschiedenen oder gleichen Beleuchtungsobjekten erlangt, wobei es sich um gleiche und/oder unterschiedliche Einstellungsmöglichkeiten handeln kann. Am meisten bevorzugt werden alle Einstellungsmöglichkeiten aller Beleuchtungsobjekte erlangt. Hierdurch ist eine besonders präzise und umfassende Anpassung möglich, jedoch ist die erlangte Datenmenge je nach Setup sehr groß. Beim Bestimmen wird bevorzugt eine Anzahl an Beleuchtungsobjekten und/oder der Beleuchtungsmerkmale, die unterhalb der Gesamtanzahl der zur Verfügung stehenden Beleuchtungsobjekte liegt, bestimmt. Weiter bevorzugt werden mindestens 2, 3, 4, 5, 6, 7, 8, 9, 10, 11, 12, 13, 14, 15, 16, 17, 18, 19, 20, 25, 30, 35, 40, 45, 50, 55, 60, 65, 70, 75, 80, 85, 90, 100, 150, 200, 250, 300, 350, 400, 450, 500, 550, 600, 650, 700, 750, 800, 850, 900, 950, 1.000, 1.500, 2.000, 2.500, 3.000, 3.500, 4.000, 4.500, 5.000, 5.500, 6.000, 6.500, 7.000, 7.500, 8.000, 8.500, 9.000, 9.500, 10.000, 15.000, 20.000, 25.000, 30.000, 35.000, 40.000, 45.000, 50.000, 55.000, 60.000, 65.000, 70.000, 75.000, 80.000, 85.000, 90.000, 95.000, 100.000, 150.000, 200.000, 250.000, 300.000, 350.000, 400.000, 450.000, 500.000, 550.000, 600.000, 650.000, 700.000, 750.000, 800.000, 850.000, 900.000, 950.000, 1.000.000, 1.500.000, 2.000.000, 2.500.000, 3.000.000, 3.500.000, 4.000.000, 4.500.000, 5.000.000, 5.500.000, 6.000.000, 6.500.000, 7.000.000, 7.500.000, 8.000.000, 8.500.000, 9.000.000, 9.500.000, 10.000.000, 15.000.000, 20.000.000, 25.000.000, 30.000.000, 35.000.000, 40.000.000, 45.000.000, 50.000.000, 55.000.000, 60.000.000, 65.000.000, 70.000.000, 75.000.000, 80.000.000, 85.000.000, 90.000.000, 95.000.000, 100.000.000, 150.000.000, 200.000.000, 250.000.000, 300.000.000, 350.000.000, 400.000.000, 450.000.000, 500.000.000, 550.000.000, 600.000.000, 650.000.000, 700.000.000, 750.000.000, 800.000.000, 850.000.000, 900.000.000, 950.000.000 oder 1.000.000.000 Beleuchtungsobjekte und/oder Beleuchtungsmerkmale bestimmt. Noch mehr bevorzugt wird mindestens ein Beleuchtungsmerkmal und/oder mindestens eine Einstellungsmöglichkeit des mindestens einen bestimmten Beleuchtungsobjekts bestimmt, welches eine Änderung erfahren bzw. welches die Änderung herbeiführen soll. Am meisten bevorzugt werden mindestens 2, 3, 4, 5, 6, 7, 8, 9, 10, 11, 12, 13, 14, 15, 16, 17, 18, 19, 20, 25, 30, 35, 40, 45, 50, 55, 60, 65, 70, 75, 80, 85, 90, 100, 150, 200, 250, 300, 350, 400, 450, 500, 550, 600, 650, 700, 750, 800, 850, 900, 950, 1.000, 1.500, 2.000, 2.500, 3.000, 3.500, 4.000, 4.500, 5.000, 5.500, 6.000, 6.500, 7.000, 7.500, 8.000, 8.500, 9.000, 9.500 oder 10.000 Einstellungsmöglichkeiten des mindestens einen bestimmten Beleuchtungsobjekts bestimmt.

In nächsten, hier vierten, Schritt d. wird ein Ablaufplan durch Eingabe des mindestens einen bestimmten Beleuchtungsobjekts, des mindestens einen bestimmten Beleuchtungsmerkmals und/oder der mindestens einen Einstellungsmöglichkeit in das trainierte maschinell lernende Modell mittels Inferenz erstellt. Die Erstellung des Ablaufplans mittels Inferenz ist durch vor der Ausführung des Verfahrens erfolgtes Trainieren des trainierten maschinell lernenden Modells mit Trainingsdatensätzen möglich. Bevorzugt handelt es sich bei dem Trainieren um überwachtes Lernen, unüberwachtes Lernen oder bestärkendes Lernen. Der Ablaufplan setzt alle Unteraufgaben nach den Vorgaben des Benutzers um. Weiter bevorzugt wird das trainierte maschinell lernende Modell während und/oder nach der Ausführung des erfindungsgemäßen Verfahrens aktualisiert, indem der Benutzer eine Bewertung des erstellten Ablaufplans vornimmt oder dem Benutzer während der Ausführung des Verfahrens rückgemeldete Zwischeninformationen bewertet und diese Bewertung als neuer Trainingsdatensatz dem maschinell lernenden Modell zugeführt wird. Dies ermöglicht eine stetige Verbesserung und Individualisierung des trainierten maschinell lernenden Modells durch den Benutzer. Weiter bevorzugt wird in Schritt c. und/oder in Schritt d. mindestens eine Einstellungsmöglichkeit zur Einstellung des mindestens einen bestimmten Beleuchtungsobjekts und/oder des mindestens einen bestimmten Beleuchtungsmerkmals bestimmt.

Das trainierte maschinell lernende Modell ist bevorzugt zweigeteilt, wobei der erste Teil in Schritt c. und der zweite Teil in Schritt d. eingesetzt wird. Dies ermöglicht ein einfaches Auslesen von Zwischenergebnissen, insbesondere des Ergebnisses der Bestimmung des mindestens einen Beleuchtungsobjekts und/oder des mindestens einen Beleuchtungsmerkmals, wodurch die Korrektur von Fehlern durch Anpassung erleichtert wird. Weiter ist es denkbar, dass es sich um zwei unabhängige trainierte maschinell lernende Modelle handelt, wobei das trainierte maschinell lernende Modell in Schritt c. ein erstes trainiertes maschinell lernendes Modell und das trainierte maschinell lernende Modell in Schritt d. ein zweites trainiertes maschinell lernendes Modell ist. Noch mehr bevorzugt ist das trainierte maschinell lernende Modell einteilig, wodurch die Ausführung von Schritt c. und Schritt d. teilweise oder vollständig parallel erfolgen kann und/oder mindestens einmal wiederholt werden kann. Dies führt zu besseren Ergebnissen bei einer schnelleren Ausführungszeit. Besonders bevorzugt ist das trainierte maschinell lernende Modell ein künstliches neuronales Netzwerk, insbesondere ein rekurrentes neuronales Netzwerk (RNN), ein Feedforward neuronales Netzwerk (FNN), ein faltendes neuronales Netzwerk (Convolutional Neural Network - CNN), ein Transformer, ein flussbasiertes generatives Modell (Flow Based Generative Model), ein entwickeltes neuronales Netzwerk (Evolving Neural Network), ein Codierer-Decodierer-Modell (Encoder-Decoder-Model), ein Variational Autoencoder, ein autoregressives Modell (AR-MA-Modell), eine beschränkte Boltzmannmaschine (Restricted Boltzmann Machine - RBM) und/oder ein Diffusionsmodell (Diffusion Model), ein verdecktes Markovmodell (Hidden Markov-Model - HMM) und/oder eine Support-Vector-Machine (SVM). Des Weiteren ist es denkbar, die Methoden des Genetic Programming, des Boostings, des Decision-Tree-Machine-Learnings, der Kerndichteschätzung (Kernel Density Estimation - KDE), des Expertensystems (Expert Systems - ES), eines (naiven) Bayes- Klassifikators, des Gradient-Boostings, der linearen Diskriminanzanalyse (Linear Discriminant Analysis), der Nächsten-Nachbarn-Klassifikation (Nearest Neighbour Classificator), eines Cluster-Analyse-Verfahrens, insbesondere des Single-Linkage-Verfahrens, des Complete-Linkage-Verfahrens, des Ward-Verfahrens, des K-Means-Algorithmus, des Fuzzy-C-Means-Algorithmus, des Erwartungs-Maximierungs-Algorithmus (EM-Algorithmus), des DBSAN (Density-Based Spatial Clustering of Applications with Noise), des STING-Algorithmus (Statistical Information Grid-based Clustering-Algorithmus) und/oder des CLI-QUE-Algorithmus (Clustering Inquest-Algorithmus), und/oder eines Verfahrens der Anomaliedetektion, insbesondere des Local-Outlier-Factor (LOF), des Isolation Forest und/oder des Autoencoders, und/oder der Hauptkomponentenanalyse (Principal Component Analysis - PCA) einzusetzen. Weiter können Verfahren des bestärkenden Lernens (Reinforcement Learning) verwendet werden, wie assoziiertes bestärkendes Lernen (Associative Reinforced Learning), tiefes bestärkendes Lernen (Deep Reinforcement Learning), gegensätzliches tiefes bestärkendes Lernen (Adversarial Deep Reinforcement Learning), unscharfes bestärkendes Lernen (Fuzzy Reinforcement Learning) und/oder sicheres bestärkendes Lernen (Safe Reinforcement Learning). Insbesondere ist es denkbar, dass ebenfalls Verfahren zur Clusterbildung von Daten verwendet werden. Dem Fachmann sind geeignete Maßnahmen zur Erstellung, Verwendung und/oder zum Training bekannt. Es ist ebenfalls denkbar, dass die Trainingsdaten in einer Datenbank gespeichert werden, wobei die Datenbank im Betrieb beziehungsweise bei Verwendung des erfindungsgemäßen Verfahrens durch neue Trainingsdaten stetig erweitert wird. Weiter ist es denkbar, dass das trainierte maschinell lernende Modell das Sprachmodell aus Schritt b. ist. Dem Fachmann sind weitere maschinell lernfähige Modelle sowie Möglichkeiten zu deren Erstellung, Verwendung und/oder zum Training bekannt.

Weiter ist es denkbar, dass nach der Ausführung des Schritts a., b., c. und/oder d. ein Agentensystem das Ergebnis, nämlich die mindestens eine Unteraufgabe, das Bestimmen des mindestens einen Beleuchtungsobjekts und/oder des mindestens einen Beleuchtungsmerkmals des mindestens einen bestimmten Beleuchtungsobjekts und/oder den Ablaufplan, überprüft und validiert. Es ist denkbar, die Schritte a., b., c. und/oder d. teilweise oder vollständig unter Modifikation der Eingabe zu wiederholen, sollte die Überprüfung negativ ausfallen. In einer bevorzugten Erweiterung des Agentensystems kommen mehrere Agenten mit dedizierten Rollen zum Einsatz, wie insbesondere zur Überprüfung der Ergebnisse, zur Analyse von Fehlermeldungen, zur generellen Überwachung und Aufteilung der Unteraufgaben und/oder zur Ausführung der Befehle selbst.

Bevorzugt umfasst der Ablaufplan mindestens einen Simulationsdatensatz, mindestens ein Modell, insbesondere ein virtuelles 3D-Modell, mindestens ein Cue, insbesondere eine Reihe von Cues, mindestens ein Preset, mindestens eine Sequenz, mindestens ein Stack, mindestens eine Videodatei, insbesondere eine Videoaufnahme und/oder Simulation, und/oder mindestens ein Datenpaket, insbesondere umfassend Recipes, MAtricks, Phasers, Timecodes, Macros, Lua Plugins, Filter, Selektionen, Effekte, BitMaps und/oder Generatoren. Besonders bevorzugt umfasst der Ablaufplan ein DMX-Datenpaket oder ein Artnet-Datenpaket. Dabei handelt es sich um die am weitesten verbreiteten Protokolle zur Steuerung von Lichttechnik. Besonders bevorzugt umfasst das Datenpaket selbst mindestens ein Preset, mindestens ein Cue, mindestens eine Sequenz und/oder mindestens ein Stack. Bei dem Simulationsdatensatz handelt es sich bevorzugt um eine Simulation einer Bühne mit darauf angeordneten Beleuchtungsobjekten, insbesondere Beleuchtungseinrichtungen. Weiter bevorzugt zeigt das Modell ebenfalls eine Bühne mit Beleuchtungsobjekten, insbesondere Beleuchtungseinrichtungen. Weiter bevorzugt zeigt die Videodatei, insbesondere die Videoaufnahme und/oder die Simulation, den Ablauf einer Lichtshow.

Anschließend wird im nächsten, hier fünften, Schritt e. mindestens ein Beleuchtungszustand gemäß dem Ablaufplan verändert. Es ist ebenfalls denkbar, dass der Ablaufplan in einer Reihe von Ablaufplänen, insbesondere am Ende der Reihe von Ablaufplänen, zur Erstellung und Abspeicherung einer Lichtshow abgespeichert wird. Weiter ist es denkbar, dass der Ablaufplan einen anderen Ablaufplan in der Reihe der Ablaufpläne ersetzt. Hierdurch wird eine bestehende Lichtshow nach Vorgabe des Benutzers abgeändert. Besonders bevorzugt umfasst die Änderung gemäß dem Ablaufplan eine Bewegung, insbesondere eine Bewegungsgeschwindigkeit, und/oder einen Statuswechsel, wie das Ein- und Ausschalten, Veränderungen der Intensität, des Fokus, der Form und/oder Farbe mindestens eines Beleuchtungsobjekts, insbesondere des mindestens einen bestimmten Beleuchtungsobjekts. Noch mehr bevorzugt umfasst der Ablaufplan ein Datenpaket, das über eine Ausgangsschnittstelle direkt an eine Beleuchtungssteuerung, insbesondere ein Lichtsteuersystem, übertragbar ist.

Das Verfahren kann dabei anhand eines real existierenden Beleuchtungsobjekts, insbesondere einer Beleuchtungseinrichtung an einer Aufführungsfläche, insbesondere einer Bühne, durchgeführt werden oder virtuell in einer Simulation erfolgen. Zudem kann das Verfahren anhand eines virtuellen Beleuchtungsobjekts, insbesondere von Parametern in einem Steuerungscode, durchgeführt werden. Weiter ist das Verfahren teilweise oder vollständig automatisierbar. In der Lichtshowtechnik ist es üblich, komplizierte Lichtshows zunächst in einem Simulationsprogramm zu erstellen und diese anschließend der real existierenden Bühnentechnik, die durch die Simulation abgebildet ist, zuzuführen. Der Ablaufplan kann weiter mögliche Einschränkungen, die aufgrund des Beleuchtungsobjekts oder auf Wunsch des Benutzers vorliegen, berücksichtigen. Insbesondere ist es denkbar, dass der Ablaufplan zunächst das Ausschalten des Leuchtmittels des Beleuchtungsobjekts vorsieht, bevor dieses in die Endposition fährt. Bei Erreichen der Endposition wird das Leuchtmittel des Beleuchtungsobjekts erneut eingeschaltet, und die laut dem Ablaufplan vorgesehenen Beleuchtungsmerkmale werden eingestellt.

Es ist einem Fachmann verständlich, dass das zuvor beschriebene Verfahren mindestens die fünf genannten Schritte umfasst, welche einzeln oder insgesamt beliebig oft wiederholbar sind. Dabei ist es denkbar, dass das Verfahren auch, wie an anderer Stelle beschrieben, weitere Schritte umfasst und/oder dass die beschriebenen Schritte in Teilschritte, Unterschritte bzw. Unteraufgaben zerlegbar sind.

Durch das erfindungsgemäße Verfahren wird auf einfache aber wirkungsvolle Art der von dem Benutzer in dem Sprachbefehl geäußerte Änderungswille umgesetzt, ohne dass sich der Benutzer komplizierter Programmiersprache bedienen muss. Insbesondere kann sich der Benutzer Alltagssprache und/oder Umgangssprache bedienen. Dies ermöglicht die einfache und schnelle Erstellung von Lichtshows ohne vorherige Schulung.

Der Begriff "Sprachmodell" betrifft ein mathematisches Modell, das die Abfolge von Elementen in einer Sequenz natürlicher Sprache modelliert, und das derart angepasst ist, mindestens eine Unteraufgabe in der natürlichen Sprache zu erfassen und zu vereinzeln.

Der Begriff "Unteraufgabe" betrifft einen vom Benutzer geäußerten Änderungswunsch eines Beleuchtungszustands mindestens eines Beleuchtungsmerkmals des Beleuchtungszustands, eine vom Benutzer vergebene Auswahl mindestens eines Beleuchtungsobjekts oder mindestens einer Gruppe von Beleuchtungsobjekten, deren Beleuchtungszustand bzw. deren Beleuchtungszustände eine Änderung erfahren soll/en, und/oder einen direkten oder indirekten Aspekt davon und/oder von einer bestehenden Lichtshow für mindestens ein Beleuchtungsobjekt.

Der Begriff "Beleuchtungsobjekt" betrifft ein Objekt mit oder ohne direktes physisches Gegenstück innerhalb eines Lichtsteuerungssystems mit mindestens einem manipulierbaren Beleuchtungsmerkmal, wobei das Verändern des Beleuchtungsmerkmals eine menschlich wahrnehmbare statische oder dynamische Veränderung in der physischen Repräsentation des Lichtsteuersystems haben kann. Ein Beleuchtungsobjekt ist insbesondere, jedoch keinesfalls ausschließlich, eine Beleuchtungseinrichtung, ein Speedmaster, ein Cue, ein Preset, eine Sequenz, ein Fixture, eine zeitliche Reihenfolge und/oder eine Lichtstimmung.

Der Begriff "Beleuchtungseinrichtung" betrifft eine Vorrichtung, die Licht zur Ausleuchtung und/oder aus Effektgründen für eine Lichtshow erzeugen kann und insbesondere mit einem Lichtsteuersystem ansteuerbar ist.

Der Begriff "Cue" betrifft einen Container von Daten, insbesondere von Beleuchtungsobjekten, der einer einzelnen Lichtstimmung bzw. einem Look der Inszenierung entspricht, wobei ein Cue in der Regel voreingestellt und/oder voreinstellbar ist.

Der Begriff "Preset" betrifft einen Container von Daten, insbesondere von Beleuchtungsobjekten, einer begrenzten Anzahl an Repräsentationen bestimmter Beleuchtungsmerkmale, die zur Erstellung von Cues verwendet werden.

Der Begriff "Sequenz" betrifft eine Liste und/oder eine Reihung von Cues.

Der Begriff "Typ der Beleuchtungseinrichtung" betrifft die Art einer Beleuchtungseinrichtung. Insbesondere kann der Typ der Beleuchtungseinrichtung ein PAR-Scheinwerfer, ein Blinder, ein Flutlichtstrahler, ein Linsenscheinwerfer, ein Kopfschwenker, ein Scanner, ein Showlaser, ein LED-Scheinwerfer, eine Flächenleuchte, eine Horizontalleuchte und/oder ein moving light sein. Dem Fachmann sind weitere Beleuchtungseinrichtungen sowie Methoden zu deren Ansteuerung bekannt.

Der Begriff "Beleuchtungsmerkmal" betrifft ein einzelnes Merkmal eines Beleuchtungsobjekts bzw. den das einzelne Merkmal repräsentierenden Wert und/oder den Einstellungsreichsbereich des repräsentierenden Werts. Ein Beleuchtungsmerkmal ist insbesondere, aber keinesfalls ausschließlich, der Status, die Lichtfarbe, der Farbton, die Farbtemperatur, die Helligkeit, der Zoom, der Fokus, die Iris, die Form, die Ausrichtung, die Verdrehung, die Position und/oder die Geschwindigkeit.

Der Begriff "Beleuchtungszustand" betrifft die Menge aller Beleuchtungsmerkmale eines Beleuchtungsobjekts.

Der Begriff "Zustand des Lichtsteuersystems" betrifft die Menge der Beleuchtungszustände aller Beleuchtungsobjekte in einem Lichtsteuersystem.

Der Begriff "Erlangen" betrifft das Einholen von Informationen und/oder Wissen, sodass diese dem maschinell lernenden Modell in einer eine Verarbeitung ermöglichenden Weise zur Verfügung stehen.

Der Begriff "maschinell lernendes Modell" betrifft ein Programm, das dazu eingerichtet ist, statistische Zusammenhänge, Muster und/oder Strukturen zwischen den in den Trainingsdatensätzen enthaltenen Informationen ohne explizite Vorgabe in der Programmierung zu erkennen und, basierend darauf, auf Grundlage einer als Eingabe erhaltenen Information mindestens eine Ausgabe zu ermitteln.

Der Begriff "Inferenz" betrifft das Ableiten mindestens einer Ausgabe mittels des durch die Trainingsdatensätze erstellten maschinell lernenden Modells.

Der Begriff "Bestimmen" oder "Bestimmung" betrifft insbesondere eine Auswahl mindestens eines Beleuchtungsobjekts, wobei mindestens ein Beleuchtungsmerkmal des mindestens einen bestimmten Beleuchtungsobjekts nach Vorgabe des Benutzers verändert werden soll, eine Auswahl mindestens eines Beleuchtungsmerkmals, wobei das mindestens eine Beleuchtungsmerkmal nach Vorgabe des Benutzers verändert werden soll und/oder ein Festsetzen mindestens eines Werts mindestens eines bestimmten Beleuchtungsmerkmals, der der Vorgabe des Benutzers entsprechen soll.

Der Begriff "Agent" betrifft ein autonom handelndes System, das durch die Eingabe von Informationen Entscheidungen trifft.

Vorteilhafte Weiterbildungen der Erfindung, welche einzeln oder in Kombination realisierbar sind, sind in den Unteransprüchen dargestellt.

Es ist denkbar, dass das Verfahren nach Schritt d. und/oder nach Schritt e. einen nächsten Schritt, Schritt f., umfasst, wobei der Schritt f. Folgendes umfasst:
f. Erlangen des mindestens eines geänderten Beleuchtungsmerkmals und Validieren des mindestens einen geänderten Beleuchtungsmerkmals.

Bei der Validierung wird bevorzugt insbesondere überprüft, ob sich das Beleuchtungsmerkmal in der gemäß dem Ablaufplan und gemäß der Unteraufgabe vorgesehenen Weise geändert hat. Durch die Validierung kann überprüft werden, ob die Ausführung der Schritte b. bis e. zu dem gewünschten Ergebnis geführt hat. Besonders bevorzugt wird die Validierung durch einen Agenten durchgeführt. Weiter bevorzugt ist der Agent ein auf die Validierung trainiertes maschinell lernenden Modell oder ein auf die Validierung gerichteter deterministischer Algorithmus. Zur Validierung wird dem Agenten bevorzugt neben dem mindestens einen geänderten Beleuchtungsmerkmal weiter die mindestens eine Unteraufgabe, nämlich das mindestens eine Beleuchtungsmerkmal, die Bestimmung des mindestens einen Beleuchtungsobjekts oder/und des mindestens einen Beleuchtungsmerkmals und/oder der Ablaufplan, bereitgestellt. Das mindestens eine Beleuchtungsmerkmal betrifft dabei die Einstellung des geänderten Beleuchtungsmerkmals vor der Änderung. Durch die Bereitstellung von mehr Informationen ist die Validierung zuverlässiger. Noch mehr bevorzugt werden alle in Schritt e. geänderten Beleuchtungsmerkmale in Schritt f. validiert. Am meisten bevorzugt wird der Zustand des Lichtsystems erlangt und validiert. Durch die vollständige Erfassung können insbesondere Beleuchtungsmerkmale, die nicht verändert worden sind, jedoch nach dem Sprachbefehl des Benutzers Veränderung erfahren sollen, erfasst und bei der Validierung berücksichtigt werden. Zusätzlich oder alternativ kann das Validieren durch Rück- und/oder Abfrage an den Benutzer erfolgen.

Dabei ist es in einer Weiterbildung denkbar, dass der Schritt f. weiter Folgendes umfasst: Modifizieren der Unteraufgabe, der Bestimmung und/oder des Ablaufplans und Wiederholen der Schritte b., c., d., e. und/oder f., falls das Validieren ein negatives Ergebnis hat. Wenn das geänderte Beleuchtungsmerkmal und/oder die Änderung des geänderten Beleuchtungsmerkmals nicht der Vorgabe der Unteraufgabe und/oder des Ablaufplans entspricht, wird durch eine Modifizierung ein entsprechend neuer Ablaufplan erstellt, um das gewünschte Ziel zu erreichen. Es ist dabei offensichtlich, dass, je nachdem, an welcher Stelle die Abweichung aufgetreten ist bzw. an welcher Stelle die Modifizierung vorgenommen wird, die die Modifizierung betreffenden Schritte wiederholt werden. Wird der Ablaufplan modifiziert, ist es denkbar, die Schritte b. und c. nicht oder nicht vollständig erneut auszuführen. Es ist jedoch denkbar, den Schritt c. erneut auszuführen, um gegebenenfalls mindestens ein anderes Beleuchtungsobjekt und/oder mindestens ein anderes Beleuchtungsmerkmal zu bestimmen. Bevorzugt ist es denkbar, dass die Modifizierung die Rückänderung des mindestens einen geänderten Beleuchtungsmerkmals beinhaltet.

Es ist weiter denkbar, dass der Sprachbefehl in Schritt a mündlich oder schriftlich vorliegt. Ein mündlicher Sprachbefehl kann über eine als Mikrofon ausgestaltete Schnittstelle eingegeben werden. Ein schriftlicher Sprachbefehl kann insbesondere über ein Eingabe-Interface, insbesondere eine Tastatur, eingegeben werden. Es ist denkbar, dass der Sprachbefehl sowohl einen mündlichen als auch einen schriftlichen Anteil umfasst, wobei die Anteile zusammengesetzt werden. Weiter ist es denkbar, dass das Sprachmodell in Schritt a. den mündlichen Teil in einen schriftlichen Teil, insbesondere einen Text, umwandelt. Zudem ist es denkbar, dass ein mündlicher Sprachbefehl an anderer Stelle aufgenommen und vor Ort abgespielt wird.

Der Begriff "mündlich" betrifft gesprochene Sprache.

Der Begriff "schriftlich" betrifft niedergeschriebene Sprache.

Es ist zudem denkbar, dass der Ablaufplan einen ausführbaren Steuerungscode für ein Lichtsteuersystem, insbesondere ein Lichtsteuerpult, umfasst und dass das Verändern in Schritt e. durch Ausführen des Steuerungscodes erfolgt. Hierdurch ist eine direkte und unmittelbare Veränderung an der Lichttechnik am Veranstaltungsort durch den Sprachbefehl mittels des erfindungsgemäßen Verfahrens erreichbar. Der Steuerungscode umfasst bevorzugt mindestens einen Steuerungsbefehl.

Der Begriff "Lichtsteuersystem" betrifft eine Software, insbesondere eine auf einem Lichtsteuerpult installierte Software, mit Schnittstellen zur Steuerung mindestens einer realen Beleuchtungseinrichtung und Schnittstellen zu einem menschlichen Nutzer, welche es dem Nutzer ermöglicht, soweit technisch möglich und unterstützt, Form, Fokus, Farbe, Intensität und/oder Ausrichtung des emittierten Lichts der Beleuchtungseinrichtung zu steuern.

In einer Weiterbildung des Verfahrens ist es denkbar, dass in Schritt d. das Erstellen des Ablaufplans mittels Inferenz mit dem trainierten maschinell lernenden Modell unter Eingabe der Unteraufgabe erfolgt. Hierdurch kann in diesem Stadium des Verfahrens die Unteraufgabe erneut berücksichtigt werden, wodurch sich bessere und präzisere Ergebnisse erreichen lassen. Auch kann eine Zwischenvalidierung durch einen Agenten oder ein Agentensystem erfolgen, um einen fehlerhaften Ablaufplan zu verhindern. Das mindestens eine bestimmte Beleuchtungsobjekt, das mindestens eine bestimmte Beleuchtungsmerkmal und/oder die mindestens eine Einstellungsmöglichkeit werden neben der Unteraufgabe weiterhin in das trainierte maschinell lernende Modell eingegeben.

Der Begriff "berücksichtigen" betrifft das erfassbare Bereitstellen der zu berücksichtigenden Information in einer Weise, dass das trainierte maschinell lernende Modell und/oder das Sprachmodell hierin statistische Zusammenhänge, Muster und/oder Strukturen insbesondere zu den anderen Eingaben und/oder Informationen erkennen kann, jedoch nicht muss.

Darüber hinaus ist es denkbar, dass in Schritt b. das Erstellen der mindestens einen Unteraufgabe unter Berücksichtigung von Kontext erfolgt. Dies ermöglicht die Einbindung von zusätzlichen Informationen bei der Bearbeitung des Sprachbefehls, wodurch der Benutzer einen weitgehend natürlicheren Sprachgebrauch haben kann. Hierdurch werden fehlerhafte Ausführungen des Ablaufplans verhindert und präzisere Ergebnisse erreicht. Weiter wird es ermöglicht, Informationen aus einem Gespräch von mindestens zwei Benutzern zu ziehen. Besonders bevorzugt ist der Kontext mindestens ein früherer Sprachbefehl, der von dem Benutzer vor dem aktuellen Sprachbefehl eingeben worden ist. Der Benutzer muss daher nicht jedes Mal einen vollständigen, in sich verständlichen Sprachbefehl formulieren. Bevorzugt werden mindestens 2, 3, 4, 5, 6, 7, 8, 9, 10, 11, 12, 13, 14, 15, 16, 17, 18, 19 oder 20, insbesondere alle, frühere Sprachbefehle berücksichtigt.

Zudem ist es denkbar, dass in Schritt b. das Erstellen mindestens einer Unteraufgabe, in Schritt c. das Bestimmen des mindestens einen Beleuchtungsobjekts und des mindestens einen Beleuchtungsmerkmals des mindestens einen bestimmten Beleuchtungsobjekts mittels Inferenz mit dem trainierten maschinell lernenden Modell und/oder in Schritt d. das Erstellen des Ablaufplans mittels Inferenz mit dem trainierten maschinell lernenden Modell unter Berücksichtigung mindestens eines weiteren Faktors erfolgt. Bevorzugt ist der weitere Faktor ein Musikstück, ein Ortsmerkmal, ein Zusatzzustand mindestens einer Zusatzeinrichtung, eine Lichtshow und/oder eine Skizze. Die Berücksichtigung des Musikstücks ermöglicht eine auf die geplante Vorführung besser abgestimmte Lichtshow, was dem Benutzer die Erstellung der Lichtshow vereinfacht. Ein Ortsmerkmal ist insbesondere ein auf den Veranstaltungsort bezogenes Merkmal, insbesondere, ob es sich um eine Halle oder eine Freilandfläche handelt. Zudem kann ein Zeitmerkmal berücksichtigt werden, wodurch auf die Helligkeit der Umgebung geschlossen werden kann. Die Zusatzeinrichtung kann insbesondere in der Bühnentechnik gängige Einrichtungen darstellen, wie insbesondere einen Vorhang, einen Bildschirm und/oder ein Effektgerät. Dabei ist es ebenfalls denkbar, dass mittels eines Agenten eine Videosequenz für den Bildschirm erstellt wird. Die Eingabe einer bestehenden Lichtshow, insbesondere als Steuerungscode, ermöglicht eine Anpassung der Lichtshow auf die Gegebenheiten und/oder nach den individuellen Wünschen des Benutzers. Die Skizze kann insbesondere ein Bühnenbild und/oder einen Bühnenaufbau beinhalten.

Zudem ist es denkbar, dass in Schritt c. mindestens ein Signal mindestens eines Sensors und/oder eines Senders erlangt wird, wobei in Schritt c. das Bestimmen des mindestens eines Beleuchtungsobjekts und des mindestens einen Beleuchtungsmerkmals mittels Inferenz mit dem trainierten maschinell lernenden Modell unter Eingabe des mindestens einen Signals und/oder in Schritt d. das Erstellen des Ablaufplans mittels Inferenz mit dem trainierten maschinell lernenden Modell unter Eingabe des mindestens einen Signals erfolgt. Durch den Sensor und/oder den Sender lassen sich externe, jedoch für die Lichtshow relevante, Daten berücksichtigen. Der Sensor und/oder der Sender kann insbesondere Aufschluss über externe Daten, wie Helligkeit der Umgebung, Geräuschkulisse der Umgebung und/oder das Geschehen auf der Bühne, erfassen. Insbesondere können mittels des Sensors Bewegungen von auf der Bühne agierenden Personen erfasst werden. Besonders bevorzugt ist der Sensor eine die Bühne erfassende Kamera. Weiter bevorzugt ist der Sender Teil eines Trackers. Hierdurch lässt sich die Bühnenshow besser mittels Sprachbefehl auf das auf der Bühne stattfindende Geschehen abstimmen. Neben dem Signal können bzw. müssen in Schritt c. und/oder Schritt d. andere, an anderer Stelle genannte, Faktoren eingegeben und/oder berücksichtigt werden.

In einer weiteren Ausgestaltung der Erfindung ist es denkbar, dass der Sprachbefehl einen Steuerungscode in mindestens einer ersten Nomenklatur umfasst, wobei Schritt b und/oder Schritt c. ein Übersetzen des Steuerungscodes von der mindestens einen ersten Nomenklatur in eine zweite Nomenklatur umfasst. Im Rahmen der Erfindung ist erkannt worden, dass ein verbreitetes Problem in der Lichttechniksteuerung die unterschiedlichen Nomenklaturen von unterschiedlichen Herstellern betrifft. Häufig sind die Benutzer in mindestens einer bestimmten, ersten Nomenklatur besonders gut geschult und können diese daher besonders gut einsetzen. Wird eine zweite Nomenklatur in dem Setup verwendet, auf das das Verfahren angewendet wird, ist es vorteilhaft, wenn das Sprachmodell dahingehend trainiert ist, eine Übersetzung der mindestens einen ersten Nomenklatur in die zweite Nomenklatur zu ermöglichen.

Darüber hinaus ist es denkbar, dass der Sprachbefehl in einer beliebigen Sprache oder in mehreren beliebigen Sprachen erfolgt, wobei das Sprachmodell diese in eine einheitliche Sprache übersetzt. Hierdurch ist es unerheblich, welche Sprache der Benutzer spricht.

Es ist weiter denkbar, dass das Verfahren in Schritt b. ein Evaluieren des Sprachbefehls und/oder der mindestens einen Unteraufgabe und Auffordern zur Eingabe eines weiteren Sprachbefehls umfasst, falls das Validieren ein negatives Ergebnis hat. Hierdurch kann in einem frühen Stadium der Sprachbefehl dahingehend ausgelegt werden, ob alle nötigen Informationen zur Ausführung des Sprachbefehls bekannt und/oder eindeutig sind. Bei Mehrdeutigkeit und/oder fehlender Information können diese einfach durch den Benutzer ergänzt werden. Besonders vorteilhaft werden der erste Sprachbefehl und der auf die Aufforderung erfolgte Sprachbefehl berücksichtigt. Mit anderen Worten, der erste Sprachbefehl stellt einen an anderer Stelle als früheren Sprachbefehl beschriebenen Kontext dar, der von dem Sprachmodell berücksichtigt wird. Die Aufforderung erfolgt bevorzugt schriftlich und/oder mündlich.

Darüber hinaus ist es denkbar, dass das Erlangen der mindestens einen Einstellungsmöglichkeit des mindestens einen Beleuchtungszustands durch Aufruf einer Datenbank erfolgt. In der Datenbank sind verschiedene Informationen zu dem mindestens einen Beleuchtungsobjekt, insbesondere zu der mindestens einen Beleuchtungseinrichtung, hinterlegt, insbesondere um welchen Typ einer Beleuchtungseinrichtung es sich handelt, welche Einstellungsmöglichkeiten für das Beleuchtungsobjekt vorhanden sind, auf welche Art diese einstellbar sind, die Position der Beleuchtungseinrichtung, eine mögliche Gruppierung mit anderen Beleuchtungsobjekten und/oder eine mögliche Ausrichtung der Beleuchtungseinrichtung. Auf diese Weise können die Art der Einstellungsmöglichkeit sowie deren Reichweite auf einfache Weise schnell erlangt werden.

Es wird davon ausgegangen, dass die Definitionen und/oder die Ausführungen der oben genannten Begriffe für alle in dieser Beschreibung im Folgenden beschriebenen Aspekte gelten, sofern nichts anderes angegeben ist. Insbesondere sind Aspekte eines Computersystems oder eines Computerprogrammprodukts, die im Zusammenhang mit dem oben beschriebenen Verfahren offenbart sind, mögliche Ausführungsformen eines im Folgenden beschriebenen Computersystems oder Computerprogrammprodukts und Aspekte, die im Folgenden im Zusammenhang mit einem Computersystem oder einem Computerprogrammprodukt, die Merkmale eines Verfahrens sind, offenbart sind, denkbare Merkmale des zuvor beschriebenen Verfahrens.

Erfindungsgemäß ist weiterhin ein Computersystem vorgeschlagen, wobei das Computersystem dazu eingerichtet ist, eines der zuvor beschriebenen Verfahren auszuführen, und das Computersystem mindestens eine Schnittstelle zum Erhalten des Sprachbefehls zur Ausführung von Schritt a., ein computerlesbares Speichermedium zur Speicherung des Sprachmodells und des trainierten maschinell lernenden Modells zur Ausführung der Schritte b. bis d. und mindestens eine Datenverarbeitungseinrichtung, eingerichtet zur Ausführung von Schritt b. und d., umfasst.

Mittels dieses Computersystems lassen sich die im Zusammenhang mit dem Verfahren offenbarten Vorteile erreichen. Bevorzugt umfasst das Computersystem mindestens eine Sensorschnittstelle und/oder eine Senderschnittstelle zum Empfangen eines von einem Sensor und/oder einem Sender abgegebenen Signals. Weiter bevorzugt ist die Schnittstelle ein Mikrofon und/oder eine Tastatur. Darüber hinaus umfasst das Computersystem bevorzugt eine Ausgangsschnittstelle, mittels der ein Ablaufplan und/oder ein Steuerungscode an ein Lichtsteuersystem übertragbar ist. Weiter bevorzugt umfasst das Computersystem eine Ausgabeschnittstelle, mittels der Sprache, insbesondere schriftliche Sprache oder mündliche Sprache, ausgegeben werden kann. Besonders bevorzugt umfasst die Ausgabeschnittstelle einen Bildschirm und/oder einen Lautsprecher. Bei dem Computersystem kann es sich um ein physikalisches Computersystem vor Ort, um ein über eine Schnittstelle der Fernkommunikation angebundenes, insbesondere cloudbasiertes, Computersystem und/oder eine Mischform daraus handeln.

Weiter erfindungsgemäß ist ein Computerprogrammprodukt, umfassend Softwarecodeabschnitte, die derart ausgebildet sind, dass eines der zuvor beschriebenen Verfahren mit zumindest einem Prozessor ausführbar ist, vorgeschlagen.

Weitere Einzelheiten, Merkmale und Vorteile der Erfindung ergeben sich aus der nachfolgenden Beschreibung der bevorzugten Ausführungsbeispiele in Verbindung mit den Unteransprüchen. Hierbei können die jeweiligen Merkmale für sich alleine oder zu mehreren in Kombination miteinander verwirklich sein. Die Erfindung ist nicht auf die Ausführungsbeispiele beschränkt. Die Ausführungsbeispiele sind in den Figuren schematisch dargestellt. Gleiche Bezugszeichen in den einzelnen Figuren bezeichnen gleiche oder funktionsgleiche bzw. hinsichtlich ihrer Funktion einander entsprechende Elemente.

Im Einzelnen zeigen:
- **Fig. 1:**: ein Ablaufdiagramm eines erfindungsgemäßen Verfahrens; und
- **Fig. 2:**: ein erfindungsgemäßes Computersystem.

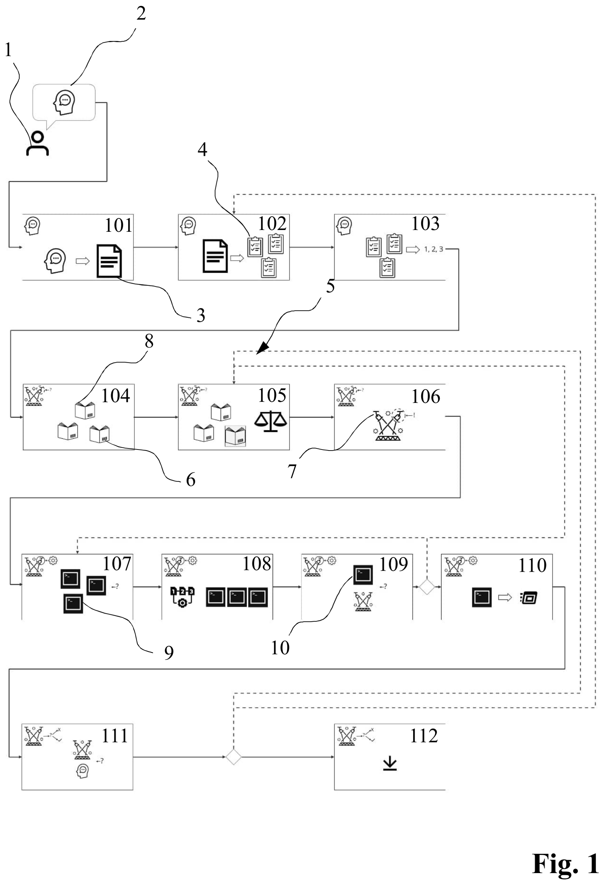

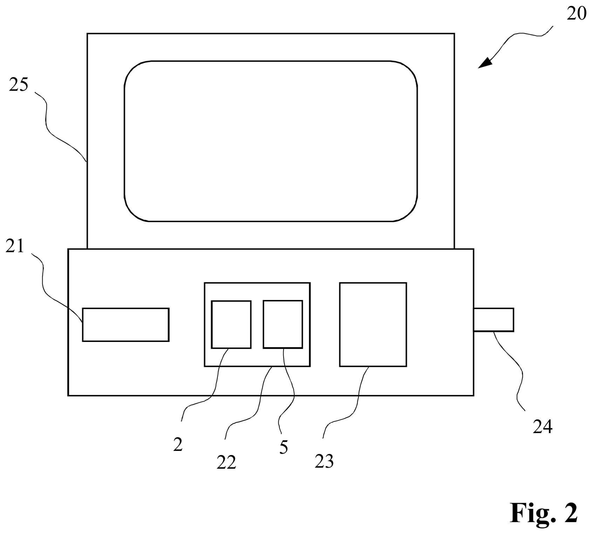

**Fig. 1** zeigt ein Ablaufdiagramm eines erfindungsgemäßen Verfahrens. Ein Benutzer 1 spricht einen Sprachbefehl 2, der durch eine geeignete Schnittstelle 21 (siehe Fig. 2), beispielsweise ein Mikrofon, aufgenommen wird. In einem Schritt a. 101 wird der Sprachbefehl 2 einem Sprachmodell 3 zugeführt. Daraufhin folgt ein erster Teilschritt eines Schritts b. 102, in dem der Sprachbefehl 3 durch das Sprachmodell 3 in drei Unteraufgaben 4 zerlegt wird, und in einem folgenden zweiten Teilschritt 103 des Schritts b. werden die drei Unteraufgaben 4 in eine Reihenfolge gebracht. Im nachfolgenden ersten Teilschritt 104 eines Schritts c. werden mindestens ein Beleuchtungsmerkmal 6 dreier Beleuchtungsobjekte 7 sowie deren Einstellungsmöglichkeiten 8 beispielweise durch Auslesen einer Datenbank und/oder in dem Lichtsteuersystem hinterlegter Daten erlangt. Die erlangten Beleuchtungsmerkmale 6 und die erlangten Einstellungsmöglichkeiten 8 werden neben den Unteraufgaben 4 in das trainierte maschinell lernende Modell 5 eingegeben, welches diese in dem nachfolgenden zweiten Teilschritt 105 des Schritts c. bewertet und gewichtet. Daraufhin folgt ein dritter Teilschritt 106 des Schritts c., in dem das trainierte maschinell lernende Modell 5 aufgrund der Unteraufgaben 4, der Beleuchtungsmerkmale 6 und der Einstellungsmöglichkeiten 8 eines der Beleuchtungsobjekte 7 und mindestens eines der Beleuchtungsmerkmale 6 des bestimmten Beleuchtungsobjekts 7 mittels Inferenz bestimmt, wobei dieses nun das bestimmte Beleuchtungsobjekt 7 und das bestimmte Beleuchtungsmerkmal 6 ist.

Im anschließenden ersten Teilschritt 107 eines Schritts d. werden die Einstellungsmöglichkeiten 8 des bestimmten Beleuchtungsobjekts 7 durch das trainierte maschinell lernende Modell 5 bestimmt, indem das trainierte maschinell lernende Modell 5 mittels Inferenz Steuerungsbefehle 9 bestimmt und/oder erstellt. Daraufhin werden in einem zweiten Teilschritt 108 des Schritts d. die ermittelten Steuerungsbefehle 9 in die korrekte Reihenfolge gebracht und die Befehle in einen Ablaufplan 10, der als Steuerungscode ausgestaltet ist, umgesetzt.

Danach wird in einem ersten Teilschritt 109 eines Schritts f. validiert, ob es sich bei dem Ablaufplan 10 um einen auf dem Lichtsteuersystem ausführbaren Ablaufplan 10 handelt. Ist dies nicht der Fall, werden die (Teil-)Schritte ab dem ersten Teilschritt 107 des Schritts d. erneut ausgeführt. Falls der durch die Steuerungsbefehle 9 beabsichtigte Erfolg eingetreten ist, wird der Ablaufplan 10 in einem Schritt e. 110 ausgeführt, und es erfolgt ein Abgleich mit den Unteraufgaben 4 und/oder dem vom Benutzer 1 geäußerten Sprachbefehl 2 im zweiten Teilschritt 111 des Schritts f.. Hierbei wird der Benutzer 1 um eine Rückmeldung gebeten. Wenn das Ergebnis nicht den Unteraufgaben 4 entspricht, werden diese modifiziert und die (Teil-)Schritte ab dem ersten Teilschritt 102 des Schritts c. oder ab dem zweiten Teilschritt 105 des Schritts c. erneut ausgeführt, je nachdem wo die Abweichung lokalisiert ist. Entspricht das Ergebnis dem in den Unteraufgaben 4 definierten Ziel und/oder dem vom Benutzer 1 geäußerten Sprachbefehl 2, wird das Verfahren in einem abschließenden Schritt 112 unter Speicherung des Ablaufplans 10 beendet.

**Fig. 2** zeigt ein erfindungsgemäßes Computersystem 20. Das Computersystem 20 umfasst eine Schnittstelle 21 zum Erhalten des Sprachbefehls, ein computerlesbares Speichermedium 22, das das trainierte maschinell lernende Modell 5 und das Sprachmodell 3 umfasst, und eine Datenverarbeitungseinrichtung 23. Weiter umfasst das Computersystem 20 eine Ausgangsschnittstelle 24 zum Übertragen eines Ablaufplans 10 und/oder eines Steuerungscodes an ein Lichtsteuerpult und eine Ausgabeschnittstelle 25, mittels der als Sprache ausgegebene Rückmeldungen an den Benutzer ausgeben werden können.

Die folgenden Ausführungsbeispiele dienen lediglich dazu, die Erfindung zu illustrieren. Sie sollen den Gegenstand der Patentansprüche in keiner Weise beschränken.

### Beispiel 1

Im Folgenden wird ein erstes Beispiel des erfindungsgemäßen Verfahrens anhand der Fig. 1 erläutert.

Der vom Benutzer 1 geäußerte Sprachbefehl 2 lautet "Rückseite der Bühne in Congo-Blue."

Im ersten Teilschritt eines Schritts b. 102 wird aus dem Sprachbefehl 2 heraus eine Unteraufgabe 4 interpretiert. Ein Teil der Unteraufgabe 4 betrifft die Bestimmung der als Beleuchtungseinrichtungen ausgestalteten Beleuchtungsobjekte 7 aus dem Teil "Rückseite der Bühne" des Sprachbefehls 2. Das trainierte maschinell lernende Modell 5 kann dabei insbesondere durch statistische Zusammenhänge über den Gruppennamen von Beleuchtungsobjekten 7, die beispielsweise unter dem Gruppennamen "Backtruss" zusammengefasst sind, auf Basis des Wissens über die Positionen der Beleuchtungsobjekte 7, welche die Rückseite der Bühne beleuchten können, und/oder auf Basis des Wissens über die Freiheitsgrade der Beleuchtungsobjekte 7, die die Beleuchtung der Rückseite der Bühne ermöglichen, im dritten Teilschritt 106 des Schritts c. eine Bestimmung treffen.

Für diese Beleuchtungsobjekte 7 müssen passende Beleuchtungsmerkmale 6 bestimmt werden. Dies ist ein weiterer Teil der Unteraufgabe 4, die aus dem Teil "Congo-Blue" des Sprachbefehls 2 abgeleitet wird. Hierfür muss zunächst der Fachausdruck Congo-Blue interpretiert werden, wobei dies vom Sprachmodell 3 im zweiten Schritt b. 102 oder vom trainierten maschinell lernenden Modell 5 insbesondere im ersten Teilschritt 104 des Schritts c. übernommen werden kann. Dies kann insbesondere durch die Suche in einer Datenbank, wie Gel Pools, Farb-Preset Pools und/oder vom Nutzer erstellte Farb-Presets, erfolgen und/oder durch das Kombinieren von zuvor erlerntem Wissen.

Das trainierte maschinell lernende Modell 5 erstellt in den anschließenden Schritten, einem zweiten Teilschritt 105 des Schritts c. bis zu einem zweiten Teilschritt 108 des Schritts d., unter Berücksichtigung der Einstellungsmöglichkeiten 8 der Beleuchtungsmerkmale 6, wie insbesondere des verwendeten Farbsystems der Beleuchtungsobjekte 7, RGB, HSB oder CIE und/oder der Ausrichtungseinstellung, wie Pan/Tilt oder XYZ-Koordinaten, und der Bestimmung den Ablaufplan 10. Dabei sollten insbesondere die Einstellungsmöglichkeiten 8 der Helligkeit, des Zooms, des Fokus, der Iris, der Form, der Verdrehung und/oder der Position berücksichtigt werden.

Um bei der Umsetzung in Schritt e. ein einheitliches Endergebnis zu erzielen, sollte das trainierte maschinell lernende Modell 5 die zeitliche Abfolge der Steuerungsbefehle 9 derart berücksichtigen, dass die Helligkeit zunächst gegebenenfalls reduziert und nach der Farbeinstellung erhöht wird, da die Beleuchtungsobjekte 7 bei einem Farbwechsel unterschiedlich hell wären, was zu einem uneinheitlichen Bild führen kann. Auch sollte die Helligkeit erst dann erhöht werden, wenn die nach dem Ablaufplan 10 vorgesehene Position und/oder Ausrichtung der Beleuchtungsobjekte 7 angefahren wurde, sodass keine ungewollten Lichtkegel über die Bühne fahren. Das heißt das trainierte maschinell lernende Modell 5 sollte automatisch passend zum Positions-Delta der notwendigen Bewegung der Beleuchtungsobjekte 7 und der wahrscheinlichen spezifischen Dauer für dieses Positions-Delta nach dem Einstellen der Position pausieren, bevor die Helligkeit erhöht wird. Insbesondere sollten sowohl das mindestens eine Beleuchtungsmerkmal 6 als auch all die früheren Sprachbefehle 2 als Kontext berücksichtigt werden, um die gewünschte Intention konfliktfrei und überprüfbar umsetzen zu können.

### Beispiel 2

Der vom Benutzer 1 geäußerte Sprachbefehl 2 lautet "Saal bitte in Rot."

Im Grunde sind die Schritte identisch zu denen im ersten Beispiel. Besonders hervorzuheben ist hier, dass das trainierte maschinell lernende Modell 5 und/oder das Sprachmodell 3 auch in der Lage sein muss, ohne eine genaue Angabe, was der Saal ist, geeignete als Beleuchtungseinrichtungen ausgestaltete Beleuchtungsobjekte 7 zur Beleuchtung dessen aus den vorhandenen Daten in der Beleuchtungssteuerung zu erschließen.

Hier sollte das trainierte maschinell lernende Modell 5 auch des Weiteren erschließen, dass zur Beleuchtung einer solch großen Fläche, wenn möglich, das Licht der Beleuchtungsobjekte 7 weniger fokussiert werden sollte. Dies wird durch die Anpassung des Zooms und/oder des Focus und somit der Strahlgröße erreicht, wodurch das Setzen weiterer Beleuchtungsmerkmale 6 unter Berücksichtigung der notwendigen Reihenfolge der Steuerungsbefehle 9 notwendig ist. An dieser Stelle ist das teilweise oder vollständige Wiederholen der Schritte c. und d. vorteilhaft.

### Beispiel 3

Der vom Benutzer 1 geäußerte Sprachbefehl 2 lautet "Mach die Bewegungen schneller".

Im Grunde sind die Schritte identisch zu denen im ersten und zweiten Beispiel. Um das Ziel zu erreichen, muss jedoch zur Erstellung des Ablaufplans 10 ein abstraktes Beleuchtungsmerkmal 6, wie die Geschwindigkeit von sich bewegenden Beleuchtungseinrichtungen, verändert werden. Das Beleuchtungsmerkmal 6 der Geschwindigkeit hat meist keine direkte physikalische Entsprechung als direkt steuerbares Beleuchtungsmerkmal 6 einer real existierenden Beleuchtungseinrichtung. Demzufolge muss das abstrakte Beleuchtungsmerkmal 6 der Geschwindigkeit in einem existierenden Steuerungscode und/oder zuvor existierenden Ablaufplan 10 verändert werden.

Dies kann je nach Lichtsteuersystem und dessen Status auf verschiedene Weise passieren. Insbesondere kann ein Ablaufplan 10 bestehend aus Steuerungsbefehlen 9 erstellt werden, welcher für alle Lichtszenen mit Bewegungseffekten die Geschwindigkeit dieser Bewegungseffekte erhöht. Zusätzlich und/oder alternativ sollte erkannt werden, dass ein sogenannter Speedmaster, welchem alle diese Bewegungen zugewiesen sind, existiert. Unter diesen Umständen sollte das trainierte maschinell lernende Modell 5 die Nutzereingabe dahingehend interpretieren und umsetzen, dass die Geschwindigkeit dieses Speedmasters erhöht wird.

### Beispiel 4

Der vom Benutzer 1 geäußerte Sprachbefehl 2 lautet "Verschiebe die Szene Gewitter nach Sonnenuntergang".

Im Grunde sind die Schritte identisch zu denen im ersten, zweiten und dritten Beispiel. An dieser Stelle muss erschlossen werden, was die Eingabe mit "Szene Gewitter und Sonnenaufgang" meint. Aus dem generellen Wissen um Lichtsteuerung und dem Wissen um den kompletten Zustand des Lichtsteuersystems sollte das trainierte maschinell lernende Modell 5 inferieren, dass es Beleuchtungsobjekte 7 der Art "Cues" verschieben soll, da der Begriff "Szene" oftmals als Synonym für den Begriff "Cue" verwendet wird. Das trainierte maschinell lernende Modell 5 sollte dann inferieren, dass mit "Gewitter" beispielsweise der Cue Nummer fünf mit Namen "Blitz und Donner" in der aktuellen Cue-Liste gemeint ist und mit "Sonnenaufgang" der Cue mit Nummer zehn in dieser Cue-Liste, in dem die meisten Beleuchtungseinrichtungen der Inszenierung von gelb nach rot übergehen und dann ausgeblendet werden. Das maschinell lernende Modell 5 erlangt dieses Wissen aus dem Zustand des Lichtsteuersystems und erschließt sich durch Inferenz, einen Befehl zu generieren, welcher die Reihenfolge der Beleuchtungsobjekte 7 Cue Nummer fünf und Cue Nummer zehn als Teil des gemeinsamen Beleuchtungsobjekts 7 einer Sequenz ändert, welche Cue Nummer fünf nach Cue Nummer zehn einsortiert.

## Patentansprüche

1. Verfahren zur Änderung mindestens eines Beleuchtungszustands durch Sprachbefehl (2), umfassend folgende Schritte:
a. (101) Erhalten eines Sprachbefehls (2) und Eingeben des Sprachbefehls (2) in ein Sprachmodell (3);
b. (102) Interpretieren und Zerlegen des Sprachbefehls (2) in mindestens eine Unteraufgabe (4) und optional (103) Sortieren der mindestens einen Unteraufgabe (4);
c. (104) Erlangen mindestens eines Beleuchtungsmerkmals (6) mindestens eines Beleuchtungsobjekts (7) und mindestens einer Einstellungsmöglichkeit (8) des mindestens einen Beleuchtungsmerkmals (6) und (105, 106) Bestimmen mindestens eines Beleuchtungsobjekts (7) und mindestens eines Beleuchtungsmerkmals (6) des mindestens einen bestimmten Beleuchtungsobjekts (7) mittels Inferenz mit einem trainierten maschinell lernenden Modell (5) unter Eingabe des mindestens einen Beleuchtungsmerkmals (6), der mindestens einen Einstellungsmöglichkeit (8) und der mindestens einen Unteraufgabe (4);
d. (107, 108) Erstellen eines Ablaufplans (10) mittels Inferenz mit dem trainierten maschinell lernenden Modell (5) unter Eingabe des mindestens einen bestimmten Beleuchtungsobjekts (7), des mindestens einen bestimmten Beleuchtungsmerkmals (6) und/oder der mindestens einen Einstellungsmöglichkeit (8);
e. (110) Verändern des mindestens einen Beleuchtungszustands gemäß dem Ablaufplan (10).

2. Verfahren nach Anspruch 1,
wobei das Verfahren einen Schritt f. (109, 111) nach dem Schritt d. (107, 108) und/oder nach dem Schritt e. (110) umfasst, wobei der Schritt f. (109, 111) Folgendes umfasst:
f. (109, 111) Erlangen des mindestens einen geänderten Beleuchtungsmerkmals (6) des mindestens einen geänderten Beleuchtungszustands und Validieren des mindestens einen geänderten Beleuchtungsmerkmals (6).

3. Verfahren nach Anspruch 2,
wobei der Schritt f. (109, 111) weiter Folgendes umfasst: Modifizieren der Unteraufgabe (4), des Bestimmens und/oder des Ablaufplans (10) und Wiederholen des Schritts b. (102, 103),
c. (104, 105, 106), d. (107, 108), e. (110), und/oder f. (109, 111), falls das Validieren ein negatives Ergebnis hat.

4. Verfahren nach einem der vorhergehenden Ansprüche,
wobei der Sprachbefehl (2) in Schritt a. (101) mündlich und/oder schriftlich vorliegt.

5. Verfahren nach einem der vorhergehenden Ansprüche,
wobei der Ablaufplan (10) einen ausführbaren Steuerungscode für ein Lichtsteuersystem umfasst und wobei das Verändern in Schritt e. (110) durch Ausführen des Steuerungscodes erfolgt.

6. Verfahren nach einem der vorhergehenden Ansprüche,
wobei in Schritt d. (107, 108) das Erstellen des Ablaufplans (10) mittels Inferenz mit dem trainierten maschinell lernenden Modell (5) unter Eingabe der mindestens einen Unteraufgabe (4) erfolgt.

7. Verfahren nach einem der vorhergehenden Ansprüche,
wobei in Schritt b. (102, 103) das Erstellen der mindestens einen Unteraufgabe (4) unter Berücksichtigung von Kontext erfolgt.

8. Verfahren nach einem der vorhergehenden Ansprüche,
wobei in Schritt b. (102, 103) das Erstellen der mindestens einen Unteraufgabe (4), in Schritt c. (104, 105, 106) das Bestimmen des mindestens einen Beleuchtungsobjekts (7) und des mindestens einen Beleuchtungsmerkmals (6) des mindestens einen bestimmten Beleuchtungsobjekts (7) mittels Inferenz mit dem trainierten maschinell lernenden Modell (5) und/oder in Schritt d. (107, 108) das Erstellen des Ablaufplans (10) mittels Inferenz mit dem trainierten maschinell lernenden Modell (5) unter Berücksichtigung mindestens eines weiteren Faktors erfolgt.

9. Verfahren nach Anspruch 8,
wobei der weitere Faktor ein Musikstück, ein Ortsmerkmal, ein Zusatzzustand mindestens einer Zusatzeinrichtung, eine Lichtshow und/oder eine Skizze ist.

10. Verfahren nach einem der vorhergehenden Ansprüche,
wobei in Schritt c. (104, 105, 106) mindestens ein Signal mindestens eines Sensors und/oder eines Senders erlangt wird und wobei in Schritt c. (104, 105, 106) das Bestimmen des mindestens einen Beleuchtungsobjekts (7) mittels Inferenz mit dem trainierten maschinell lernenden Modell (5) unter Eingabe des mindestens einen Signals und/oder in Schritt d. (107, 108) das Erstellen des Ablaufplans (10) mittels Inferenz mit dem trainierten maschinell lernenden Modell (5) unter Eingabe des mindestens einen Signals erfolgt.

11. Verfahren nach einem der vorhergehenden Ansprüche,
wobei der Sprachbefehl (2) ein Steuerungscode in mindestens einer ersten Nomenklatur ist und wobei Schritt b. (102, 103) und/oder Schritt c. (104, 105, 106) ein Übersetzen des Steuerungscodes von der mindestens einen ersten Nomenklatur in eine zweite Nomenklatur umfasst.

12. Verfahren nach einem der vorhergehenden Ansprüche,
wobei das Verfahren in Schritt b. (102, 103) ein Evaluieren des Sprachbefehls (2) und/oder der mindestens einen Unteraufgabe (4) und ein Auffordern zur Eingabe eines weiteren Sprachbefehls (2) umfasst, falls das Validieren ein negatives Ergebnis hat.

13. Verfahren nach einem der vorhergehenden Ansprüche,
wobei das Erlangen der mindestens einen Einstellungsmöglichkeit (8) des mindestens einen Beleuchtungszustands durch Aufruf in einer Datenbank erfolgt.

14. Computersystem (20), dazu eingerichtet, eines der Verfahren gemäß Anspruch 1 bis 13 auszuführen, umfassend mindestens eine Schnittstelle (21) zum Erhalten des Sprachbefehls (2) zur Ausführung von Schritt a. (101), ein computerlesbares Speichermedium (22) zur Speicherung des Sprachmodells (3) und des trainierten maschinell lernenden Modells (5) zur Ausführung der Schritte b. bis d. (102, 103, 104, 105, 106, 107, 108) und mindestens eine Datenverarbeitungseinrichtung (23) eingerichtet zur Ausführung von Schritt b. (102, 103) und Schritt d. (107, 108).

15. Computerprogramm-Produkt, umfassend Softwarecodeabschnitte, die derart ausgebildet sind, dass ein Verfahren nach einem der Verfahrensansprüche 1 bis 13 durch zumindest einen Prozessor ausführbar ist.
